# EUROPÄISCHE PATENTSCHRIFT

(11) **EP 0 614 296 B1**
(45) Veröffentlichungstag und Bekanntmachung des Hinweises auf die Patenterteilung: **20.08.2003**
(21) Anmeldenummer: 94200439.1
(22) Anmeldetag: 22.02.1994
(51) Int. Cl.: H04L 12/42

(54) **Lokales, nach dem asynchronen Transfermodus (ATM) arbeitendes Netzwerk**
ATM local area network
Réseau local ATM

(30) Priorität: 27.02.1993 DE 4306186
(43) Veröffentlichungstag der Anmeldung: 07.09.1994
(73) Patentinhaber: Philips Intellectual Property & Standards GmbH, 20099 Hamburg (DE); Koninklijke Philips Electronics N.V., 5621 BA Eindhoven (NL)
(72) Erfinder: Du, Yongang, Dr.-Ing., D-20097 Hamburg (DE); Kraemer, Rolf, Dr.-Ing., D-20097 Hamburg (DE)
(74) Vertreter: Volmer, Georg, Dipl.-Ing.

(56) Entgegenhaltungen:
- EP-A- 0 279 627
- EP-A- 0 457 620
- US-A- 3 713 096

## Beschreibung

Die Erfindung bezieht sich auf ein lokales, ringförmiges, nach dem asynchronen Transfermodus (ATM) arbeitendes Netzwerk mit mehreren Stationen, die jeweils über eine wenigstens eine Koppelvorrichtung enthaltende Netzwerkschnittstelle mit Sende- und Empfangs-Ringverbindungen gekoppelt sind und die zur Übertragung von Zellen vorgesehen sind.

Ein solches lokales Netzwerk ist aus der Veröffentlichung "Ohne Chips nichts los - Standard-Chips für ATM-Systeme sind im Kommen" von Bernd Reder, Elektronik 1/1993, Seiten 66 bis 75, bekannt. In diesem Übersichtsaufsatz wird der gegenwärtige Stand bei der Entwicklung von integrierten Schaltungen für Anwendungen in lokalen Netzwerken diskutiert, die nach dem asynchronen Transfermodus (ATM) arbeiten. Jede Station ist dabei über eine Netzwerkschnittstelle mit den Ringverbindungen des lokalen Netzwerkes verbunden. Zur Steuerung des ATM-Zellstromes werden in der Netzwerkschnittstelle Koppelvorrichtungen (switches) verwendet.

Das Dokument **D1: EP-A-0 279 627** offenbart eine Netzwerkschnittstelle in einem ringförmigen Netzwerk. Wenn eine Nachricht in einem Knoten, der mit einer Netzwerkschnittstelle ausgerüstet ist, ankommt , wird ihre Zieladresse mit der lokalen Knotenadresse verglichen. Wenn die Adressen übereinstimmen, wird dann die Nachricht zur Station weitergeleitet, sonst wird die Nachricht zum nächsten Knoten weitergeleitet.

Bei Verwendung eines asynchronen Transfermodus in einem System werden Nutzinformationen, z.B. Fernsprech-, Bild- oder Tonsignale, in Blöcken fester Länge über Anordnungen zur digitalen Signalverarbeitung gesendet. Als ein Block fester Länge wird eine Zelle bezeichnet, die eine vorbestimmte Anzahl von Bytes (z. B. 53 Bytes) aufweist. Eine solche Zelle kann über die digitalen Anordnungen seriell, d.h. Bit für Bit, oder parallel, z.B. Byte für Byte übertragen werden. Jede Zelle besteht aus einem Kopffeld mit einer Länge von beispielsweise 5 Byte und einem Informationsfeld, in dem die Nutzinformation untergebracht ist, mit einer Länge von beispielsweise 48 Byte. In einem solchen Kopffeld sind Wegekennungen, Daten zur Fehlererkennung und Daten für Steuerinformationen vorhanden. Unter Wegekennungen sind Bündelkennungen und Verbindungskennungen zu verstehen. Die Verbindungskennung, die auch als VCI (Virtual Channel Identifier) bezeichnet wird, enthält die Angabe über den Bestimmungsort der Zelle in dem System. Zur Übermittlung einer Zelle wird anhand der Verbindungskennung ein virtueller Kanal zur Verfügung gestellt. In der Regel wird ein VCI nach Erreichen einer Vermittlungsstelle jeweils verändert. Ein Bündel mehrerer virtueller Kanäle wird als virtueller Pfad bezeichnet. Ein virtueller Pfad wird durch die Bündelkennung gekennzeichnet. Ein solcher virtueller Pfad wird VPI (Virtual Path Identifier) genannt. Zellen sind aufeinanderfolgend bestimmten Zeitabschnitten zugeordnet. Die Dauer eines solchen Zeitabschnittes hängt von der zugrundegelegten Taktfrequenz der Übermittlungskomponente ab. Falls keine Nutzinformation vorhanden ist, werden in einem solchen Zeitabschnitt Leerzellen übertragen, d.h. Zellen ohne Nutzinformation. Zellen, die eine Nutzinformation beinhalten, werden als Nutzzellen bezeichnet.

Der Erfindung liegt die Aufgabe zugrunde, ein lokales, nach dem asynchronen Transfermodus arbeitendes Netzwerk zu schaffen, das eine besonders schnelle und kostengünstige Übertragung von Anwenderinformationen erlaubt.

Die Erfindung wird durch ein lokales, ringförmiges, nach dem asynchronen Transfermodus (ATM) arbeitendes Netzwerk der eingangs genannten Art dadurch gelöst,
daß die Netzwerkschnittstelle ein Statusregister, das dazu vorgesehen ist, den Zustand der zugehörigen Station und der Koppelvorrichtung als Statusinformation zu speichern, und eine die Koppelvorrichtung steuernde Steueranordnung enthält,
daß die Koppelvorrichtung mit dem Statusregister und mit der Steueranordnung gekoppelt ist,
und daß die Koppelvorrichtung in Abhängigkeit der Statusinformation zur Weiterleitung einer anwenderbezogene Informationen enthaltenden Anwenderzelle
- von der Empfangs-Ringverbindung zur Sende-Ringverbindung und/oder zur Station oder
- von der Station zur Sende-Ringverbindung,
   zur Weiterleitung einer wenigstens zur Aufnahme von Vermittlungsfunktionen dienenden Kontrollzelle
- von der Empfangs-Ringverbindung zur Sende-Ringverbindung und/oder zur Steueranordnung und/oder zur Station oder
- von der Steueranordnung zur Sende-Ringverbindung und/oder zur Station oder
- von der Station zur Station und/oder zur Sende-Ringverbindung und/oder zur Steueranordnung
vorgesehen ist.

Bei dem erfindungsgemäßen lokalen Netzwerk wird eine verteilte Vermittlungsarchitektur realisiert. Zumindest die Koppelvorrichtungen jeder Netzwerkschnittstelle stellen Komponenten der verteilten Vermittlungsarchitektur dar. Hierbei ist es möglich, daß jede Netzwerkschnittstelle örtlich getrennt in einer Ringstruktur oder in einer Vermittlungsanlage örtlich zusammen als Sternpunkt einer Sternstruktur eingesetzt wird. Jede Netzwerkschnittstelle ist also jeweils mit einer Koppelvorrichtung ausgestattet, welche Nutzzellen verteilt. Als Nutzzellen werden einerseits von der Koppelvorrichtung Anwenderzellen und andererseits Kontrollzellen weitergeleitet. Die Anwenderzellen enthalten im Informationsfeld z. B. Nachrichten oder Daten des Benutzers dieser Verbindung. Wenn eine virtuelle Verbindung zur Übertragung von Sprachsignalen (Telefongespräch) benutzt wird, enthält das Informationsfeld Sprachdaten. Eine Kontrollzelle enthält in Ihrem Informationsfeld Steuerungsinformationen, die zumindestens für Vermittlungsfunktionen benötigt werden. Beispielsweise wird mittels der Kontrollzellen eine Verbindung auf- oder abgebaut. Weiter können mit den Kontrollzellen auch Überwachungsfunktionen realisiert werden. In der Koppelvorrichtung wird außerdem anhand der Adresse im Kopffeld der Zelle ausgewertet, zu welchem Bestimmungsort die Zelle gelangen soll.

Anwenderzellen erhält die Koppelvorrichtung entweder von der zugeordneten Empfangs-Ringverbindung oder von der angeschlossenen Station. Die Anwenderzellen werden zur Station und/oder zur Sende-Ringverbindung weitergeleitet. Im Verteilbetrieb werden Anwenderzellen, die von der Empfangs-Ringverbindung stammen, zur Station und zur Sende-Ringverbindung gegeben.

Bei einem Empfang von Kontrollzellen kann die Koppelvorrichtung die gleichen, oben genannten Funktionen durchführen. Des weiteren können Kontrollzellen von der angeschlossenen Station oder der zugeordneten Empfangs-Ringverbindung zu einer die Koppelvorrichtung steuernden Steueranordnung weitergeleitet werden. Von der Empfangs-Ringverbindung können auch Kontrollzellen zur Station und von der Station zur Empfangs-Ringverbindung geführt werden. Die Station kann z.B. auch bei einem Selbsttest Kontrollzellen erzeugen, die über die Koppelvorrichtung wieder zur Station zurückgeführt werden. Die von der Steueranordnung erzeugten Kontrollzellen werden zur Station und/oder zur zugeordneten Sende-Ringverbindung gegeben.

Die Steueranordnung wertet die Kontrollzellen aus und führt in Abhängigkeit von diesen beispielsweise Vermittlungsaktionen durch, die bei bekannten Systemen, die nach dem asynchronen Transfermodus arbeiten, verwendet werden. Beispielsweise kann die Steueranordnung feststellen, daß eine Verbindung zwischen der zugeordneten Station und einer weiteren Station aufgebaut werden soll (Verbindungswunsch). Falls eine solche Verbindung möglich ist, erzeugt die Steueranordnung zumindest eine Kontrollzelle, in der eine entsprechende Meldung steht, welche die Steueranordnung der Station erhalten soll, mit der die Verbindung aufgebaut werden soll. Die Steueranordnung kann z.B. mittels eines Mikroprozessors realisiert sein.

In der Koppelvorrichtung werden Aktionen in Abhängigkeit von ihrem Status durchgeführt. Beispielsweise werden, wenn die Station nicht betriebsbereit ist, Zellen sofort von der Empfangs-Ringverbindung zur Sende-Ringverbindung weitergegeben, ohne daß eine Auswertung des Zellkopfes vorgenommen wird. Wenn eine Station im Initialisierungsstatus ist, werden nur bestimmte Kontrollzellen empfangen und die anderen Zellen von der Empfangs-Ringverbindung zur Sende-Ringverbindung weitergeleitet. Besteht eine Verbindung zwischen mindestens zwei Stationen und kann davon eine Station eine weitere Verbindung nicht aufnehmen, so werden alle Kontrollzellen, die einen Verbindungswunsch mitteilen ignoriert.

Durch die Verwendung von Netzwerkschnittstellen, welche jeweils mit einer Station gekoppelt sind und welche Anwenderzellen und Kontrollzellen erhalten oder abgeben, wird ein lokales Netzwerk geschaffen, welches auf einfache Art vergrößerbar oder verkleinerbar ist. Falls eine Station nicht betriebsbereit ist, wird eine Zelle einfach weitergegeben.

Zur Speicherung des Zustandes einer Station ist mit der Koppelvorrichtung ein Statusregister gekoppelt. Die Steueranordnung ist zur Entnahme des Zustands der Station und der Koppelvorrichtung aus dem Statusregister vorgesehen. Eine Statusinformation wird von der Steueranordnung auch in das Statusregister eingeschrieben und verändert.

Das auf den Ringverbindungen zugeordnete Taktsignal kann auf jeder Ringverbindung gleich gewählt werden. Eine solche Synchronisation ist jedoch sehr aufwendig, da jede Netzwerkschnittstelle von einem zentralen Taktsignal abhängig ist. Zur Vermeidung dieser aufwendigen und problematischen Ringsynchronisation ist jede Netzwerkschnittstelle
- zur Ableitung eines Empfangs-Taktsignal, das dem ankommenden Zellenstrom auf der Empfangs-Ringverbindung zugeordnet ist, und
- zur Erzeugung eines vom Empangs-Taktsignal entkoppelten Sende-Taktsignals vorgesehen, welches dem abgehenden Zellenstrom auf der Sende-Ringverbindung zugeordnet ist.

Durch diese Maßnahme sind die Taktsignale benachbarter Ringverbindungen voneinander entkoppelt.

Die Anpassung der verschiedenen Taktsignale zwischen Ringverbindungen, Netzwerkschnittstelle und Station wird mit Pufferspeichern realisiert. Hierbei enthält jede Netzwerkschnittstelle
- einen Pufferspeicher zwischen Empfangs-Ringverbindung und Koppelvorrichtung zur Anpassung des Zellenstromes an ein internes Taktsignal und
- einen Pufferspeicher zwischen Sende-Ringverbindung und Koppelvorrichtung zur Anpassung des Zellenstromes an das Sende-Taktsignal.

Des weiteren sind zwischen jeder Netzwerkschnittstelle und der zugehörigen Station Pufferspeicher zur Anpassung des von der Netzwerkschnittstele gelieferten oder zu empfangenden Zellenstromes wenigstens an ein Stations-Taktsignal vorgesehen.

Damit jede Netzwerkschnittstelle im lokalen Netzwerk effizient gesteuert werden bzw. steuern kann, ist eine solche jeweils zur Erzeugung und zum Empfang von Zellen mit unterschiedlicher Priorität vorgesehen. Beispielsweise kann den Kontrollzellen eine höhere Priorität, als den Anwenderzellen zugewiesen werden.

Eine Kontroll- oder Anwenderzelle, die von einer Netzwerkschnittstelle oder einer Station erzeugt wird, enthält eine Angabe über den Dienst, die Adresse und den Zelltyp. Diese Informationen, die sich im Kopffeld der Zelle befinden, werden dann in mindestens einer anderen Netzwerkschnittstelle oder Station ausgewertet. Ein Dienst kann eine Sprechverbindung, eine Datenverbindung usw. sein. Die Adresse gibt die jeweilige Station an, zu der eine Zelle übertragen werden soll. Der Zelltyp gibt an, ob es sich um eine Anwender- oder Kontrollzelle handelt.

Für die Information über den Dienst können die im Kopffeld der Zelle reservierten Bits für den VCI (virtual channel identifier) und für die Information über die Adressse können die im Kopffeld der Zelle reservierten Bits für den VPI (virtual path identifier) verwendet werden.

Ein Verbindungsaufbau wird bei dem erfindungsgemäßen lokalen Netzwerk folgendermaßen durchgeführt. Bei einem Verbindungswunsch einer Sende-Station mit mindestens einer Empfangs-Station wird zuerst wenigstens eine Kontrollzelle mit einer Abfrage über den Zustand der Empfangs-Station erzeugt. Mindestens eine Empfangs-Station sendet nach Empfang der Abfrage wenigstens einer Kontrollzelle mit der Information über ihren Zustand. Die Sende-Station bildet nach Empfang der Zustandsinformation wenigstens eine Kontrollzelle zum Verbindungsaufbau, wenn der Zustand mindestens einer Empfangs-Station eine Verbindung ermöglicht.

Ein Verbindungsabbau kann von einer der an der Verbindung beteiligten Stationen ausgehen. Hierbei ist die Sendeoder eine Empfangs-Station zur Erzeugung wenigstens einer Kontrollzelle mit einer Meldung über den Verbindungsabbau vorgesehen.

Damit eine Station beim Verbindungsaufbau nicht gleichzeitig die zugeordnete Sende- und Empfangs-Ringverbindung überwacht, ist jeweils eine Station nur zur Überwachung des Verbindungsaufbaus in Sende- oder Empfangsrichtung vorgesehen.

Ausführungsbeispiele der Erfindung werden nachstehend anhand der Figuren näher erläutert. Es zeigen:
- Fig. 1: ein lokales Netzwerk in Ringstruktur,
- Fig. 2: eine in dem lokalen Netzwerk nach Fig. 1 verwendbare Netzwerkschnittstelle mit zugeordneter Station und
- Fig. 3: ein lokales Netzwerk in Sternstruktur.

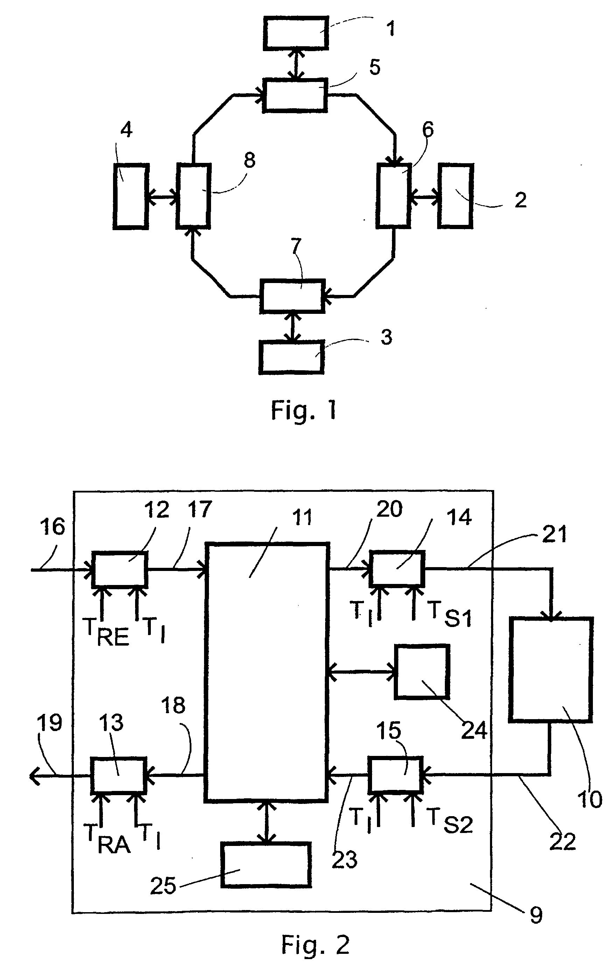

In Fig. 1 ist ein Ausführungsbeispiel eines lokalen Netzwerkes mit 4 Stationen 1 bis 4 dargestellt, die jeweils über zugeordnete Netzwerkschnittstellen 5 bis 8 mit Ringverbindungen gekoppelt sind. Die Nachrichten bzw. Informationen, die von den Stationen 1 bis 4 bzw. den Netzwerk-Schnittstellen 5 bis 8 stammen, werden nach dem asynchronen Transfermodus mittels Zellen übertragen. Eine Zelle enthält ein Kopffeld mit beispielsweise 5 Byte und ein Informationsfeld mit beispielsweise 48 Byte. Die im Kopffeld der Zelle enthaltenen Informationen dienen insbesondere zur Adressierung und zur Durchführung von Vermittlungsfunktionen.

Eine Netzwerkschnittstelle 9 und eine zugeordnete Station 10 sind in der Fig. 2 detaillierter dargestellt. Die Netzwerkschnittstelle 9 enthält eine Koppelvorrichtung 11, die über Pufferspeicher 12 bis 15 mit den Ringverbindungen und der Station 10 gekoppelt ist und den Zellenstrom weitervermittelt.

Der Pufferspeicher 12 ist einerseits mit der Empfangs-Ringverbindung 16 und andererseits mit einer Verbindung 17, die zur Koppelvorrichtung 11 führt, gekoppelt. Der Pufferspeicher 12 erhält noch ein Empfangstaktsignal T_{RE}, welches aus dem Zellenstrom der Empangs-Ringverbindung abgeleitet ist und ein internes Taktsignal T_{I} von einem Taktgenerator der Netzwerkschnittstelle 9. Der Pufferspeicher 13 ist über eine Verbindung 18 mit der Koppelvorrichtung 11 gekoppelt und liefert einen Zellenstrom an die Sende-Ringverbindung 19. Dem Pufferspeicher 13 wird das interne Taktsignal T_{I} und eine Sende-Taktsignal T_{RA} geliefert, welches beispielsweise aus dem internen Taktsignal T_{I} abgeleitet ist. Der Pufferspeicher 14, der einen Zellenstrom von der Koppelvorrichtung 11 erhält, ist einerseits über eine Verbindung 20 mit der Koppelvorrichtung 11 und andererseits über eine Verbindung 21 mit der Station 10 gekoppelt. Dem Pufferspeicher 14 wird ebenfalls das interne Taktsignal T_{I} und ein von der Station 10 geliefertes erstes Taktsignal T₅₁ geliefert. Der Pufferspeicher 15, dem ein Zellenstrom von der Station 10 geliefert wird, ist über eine Verbindung 22 mit der Station 10 und über eine Verbindung 23 mit der Koppelvorrichtung 11 gekoppelt. Dieser Pufferspeicher 15 erhält ein zweites Stations-Taktsignal T_{S2} und das interne Taktsignal T_{I}. In den Pufferspeichern 12 bis 15 findet jeweils eine Anpassung des Zellenstroms an ein Taktsignal statt. Die Ableitung der verschiedenen Taktsignale aus dem Zellenstrom und die Erzeugung des internen Taktsignals T_{I} sind hier nicht näher dargestellt. Die Stationstaktsignale T_{S1} und T_{S2} können beispielsweise gleich dem internen Taktsignal T_{I} sein. In diesem Fall werden keine Pufferspeicher 14 und 15 benötigt. Die Frequenz der Taktsignale T_{S1}, T_{S2} und T_{I} dürfen weder das Empfangs-Taktsignal T_{RE} noch das Sende-Taktsignal T_{RA} überschreiten. Das Taktsignal auf einer Ringverbindung des lokalen Netzwerkes mit der kleinsten Frequenz bestimmt die Übertragungskapazität des lokalen Netzwerkes.

In der Netzwerkschnittstelle 9 ist noch eine die Koppelvorrichtung 11 steuernde Steueranordnung 24 enthalten, die beispielsweise zum Verbindungsaufbau und -abbau dient. Die Steueranordnung 24, die als Mikroprozessor realisiert sein kann, kann ebenso wie die Station 10 Zellen erhalten und erzeugen.

Über die Ringverbindungen werden zwei Arten von Nutzzellen übertragen. Einerseits Anwenderzellen, die in ihrem Informationsfeld z. B. Nachrichten oder Daten des Benutzers einer zuvor aufgebauten Verbindung enthalten und andererseits Kontrollzellen, die in ihrem Informationsfeld Steuerungsinformationen enthalten. Eine auf der Empfangs-Ringverbindung 16 eintreffende Anwenderzelle kann einerseits zur Station 10 oder andererseits zur Sende-Ringverbindung 19 von der Koppelvorrichtung 11 weitergeleitet werden. Die Koppelvorrichtung 11 kann auch eine Anwenderzelle zur Station 10 und gleichzeitig zur Sende-Ringverbindung 19 übermitteln. Eine von der Station 10 erzeugte Anwenderzelle wird nur zur Sende-Ringverbindung 19 von der Koppelvorrichtung 11 weitergeleitet. Kontrollzellen, die von der Empfangs-Ringverbindung 16 geliefert werden, können zur Station und/oder zur Sende-Ringverbindung gegeben werden. Außerdem kann eine Kontrollzelle noch zur Steueranordnung 24 weitervermittelt werden. Kontrollzellen, die von der Steueranordnung 24 erzeugt werden, können zur Station 10 und/oder zur Sende-Ringverbindung 19 gelangen. Die von der Station 10 gelieferten Kontrollzellen können bei einem Selbsttest auch wieder zur Station 10 zurückgeführt werden. Ferner können die von der Station 10 erzeugten Kontrollzellen zur Steueranordnung 24 und/oder zur Empfangs-Ringverbindung 19 gegeben werden. Als Koppelvorrichtung 11 kann ein Teil einer bekannten Vermittlungsstelle verwendet werden, die nach dem asynchronen Transfermodus arbeitet.

In der Koppelvorrichtung 11 wird nach Empfang einer Zelle zuerst das Kopffeld einer Zelle ausgewertet. Ist die im Kopffeld enthaltene Adresse nicht gleich der Adresse der Station 10, so wird sie zur Sende-Ringverbindung 19 weitergegeben. Entspricht die Adresse im Kopffeld der Zelle der Adresse der Station 10, so wird diese an die Station 10 und/oder an die Steueranordnung 24 weitergeleitet. Ebenso ist es denkbar, daß die Kontrollzelle auch weiter zur Sende-Ringverbindung 19 gegeben wird.

Bestimmte Bits im Kopffeld einer Zelle sind für den VCI (virtual channel identifier) reserviert. Diese Angabe enthält nach Normungsvorschlägen den Bestimmungsort einer Zelle und gibt damit eine virtuelle Verbindung an. Des weiteren sind bestimmte Bits im Kopffeld der Zelle für den VPI (virtual path identifier) reserviert. Diese enthalten eine Angabe über den virtuellen Pfad. Bei einem lokalen Netzwerk mit einer überschaubaren Anzahl von Teilnehmern wird eine Pfadangabe nicht benötigt. Daher kann der VPI Informationen über die Adresse bzw. den Bestimmungsort enthalten. Der VCI kann die Angabe über den verwendeten Dienst enthalten. Unter einem Dienst wird die Angabe verstanden, ob Sprachsignale, Datensignale usw. übertragen werden.

Mit der Koppelvorrichtung 11 ist noch ein Statusregister 25 verbunden, in welchem der Zustand oder Status der Station 10 und der Koppelvorrichtung 11 gespeichert ist. Bevor die Koppelvorrichtung 11 eine Koppelfunktion durchführt, überprüft die Steueranordnung 24 den Status im Statustregister 25. Beispielsweise leitet die Koppelvorrichtung 11 keine Zelle an die Station 10 weiter, wenn im Statusregister 25 gespeichert ist, daß die Station 10 ausgeschaltet ist. In diesem Fall wird jede Zelle von der Empfangs-Ringverbindung 16 über den Pufferspeicher 12, die Verbindung 17, die Koppelvorrichtung 11, die Verbindung 18 und den Pufferspeicher 13 zur Sende-Ringverbindung 19 weitergegeben. Im Initialisierungszustand der Station 10 (z.B. nach dem Einschalten der Station 10), werden nur bestimmte Typen von Kontrollzellen an die Steueranordnug 24 oder die Station 10 weitergegeben, die von der Empfangs-Ringverbindung 16 stammen. Jede andere Zelle wird von der Empfangs-Ringverbindung 16 zur Sende-Ringverbindung 19 weitergeleitet.

Weiterhin kann die Koppelvorrichtung 11 bestimmte Zellen mit einer höheren Priorität behandeln. Liefert die Empfangs-Ringverbindung 16 beispielsweise eine Anwenderzelle und die Steueranordnung 24 gleichzeitig eine Kontrollzelle und sollen beide Zellen zur Station 10 weitergegeben werden, so wird zuerst die Kontrollzelle, die von der Steueranordnung 24 stammt, an die Station 10 gegeben und anschließend die Anwenderzelle von der Empfangs-Ringverbindung 16. Eine Prioritätenliste kann auch im Statusregister 25 abgelegt werden.

Wie oben erwähnt, dienen die Kontrollzellen zu Steuerungszwecken. Bei einem Verbindungswunsch einer Station 4 mit der Station 2 (vgl. Fig. 1) wird zuerst eine Kontrollzelle von der Station 4 erzeugt. Diese enthält in ihrem Informationsfeld eine Abfrage darüber, in welchem Zustand die Station 2 ist. Mit dieser Zustandsabfrage soll ermittelt werden, ob eine Verbindung mit der erforderlichen Kapazität aufgebaut werden kann. Im Kopffeld der Zelle wird die Adresse der Station 2 angegeben. Nach Empfang der Kontrollzelle in der Station 2 gibt diese eine Kontrollzelle aus, in der eine Information über den Zustand enthalten ist. Diese Kontrollzelle enthält die Adresse der Station 4 im Kopffeld der Zelle. Nach Empfang dieser von der Station 2 ausgesendeten Kontrollzellen überprüft die Station 4, ob eine Verbindung möglich ist. Wenn diese Verbindung aufgebaut werden kann, wird von der Station 4 zur Station 2 eine Kontrollzelle gesendet, die Signalisierungsinformationen für den Verbindungsaufbau enthält. Hier können beispielsweise die aus "ntz Bd. 43 (1990) Heft 11, S. 802-809" bekannten Signalisierungsprotokolle verwendet werden.

Bei einem Verbindungsabbau kann entweder die Station 2 oder die Station 4 eine Kontrollzelle erzeugen, die eine Meldung über den Verbindungsabbau enthält. Hier können auch wieder die o.g. Signalisierungsprotokolle verwendet werden.

Die Steueranordnung 24 in der Netzwerkschnittstelle 9 kann weiter noch zu statistischen Untersuchungen und Überwachungszwecken eingesetzt werden. Eine Station kann bei einem Verbindungsaufbau beispielsweise nur zur Feststellung der freien Kapazität der Ringverbindung in Sende- oder Empfangsrichtung vorgesehen sein. Beispielsweise kann bei einem Verbindungsaufbau zwischen der Station 4 und der Station 2 (vgl. Fig. 1) die Station 4 die Verbindung in ihrer Senderichtung, d.h. in Empfangsrichtung der Station 2, und die Station 2 in ihrer Senderichtung, d.h. in Empfangsrichtung der Station 4, überwachen.

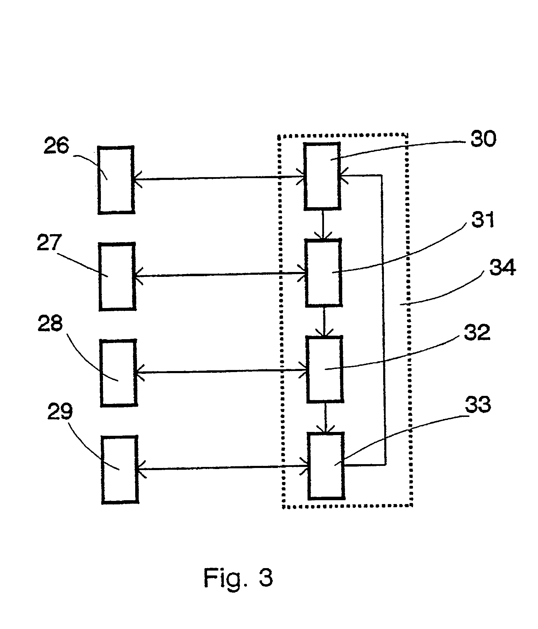

Die Fig. 1 zeigt ein lokales Netzwerk mit einer Ringstruktur. Ein lokales Netzwerk kann auch in einer Sternstruktur eingerichtet werden, wie das Fig. 3 zeigt. Hier sind ebenfalls vier Stationen 26 bis 29 dargestellt, die jeweils mit Netzwerkschnittstellen 30 bis 33 gekoppelt sind. Die Stationen sind untereinander über Ringverbindungen gekoppelt. Die Netzwerkschnittstelle 30 ist in Senderichtung mit der Netzwerkschnittstelle 31, die Netzwerkschnittstelle 31 in Senderichtung mit der Netzwerkschnittstelle 32, die Netzwerkschnittstelle 32 in Senderichtung mit der Netzwerkschnittstelle 33 und die Netzwerkschnittstelle 33 in Senderichtung mit der Netzwerkschnittstelle 30 gekoppelt. Durch die Anordnung des lokalen Netzwerkes in einer Sternstruktur bilden die Netzwerkschnittstellen 30 bis 33 eine zentrale Vermittlungsstelle 34 (Sternpunkt).

## Patentansprüche

1. Lokales, ringförmiges, nach dem asynchronen Transfermodus (ATM) arbeitendes Netzwerk mit mehreren Stationen (10), die jeweils über eine wenigstens eine Koppelvorrichtung (11) enthaltende Netzwerkschnittstelle (9) mit Sende- und Empfangs-Ringverbindungen (16, 19) gekoppelt sind und die zur Übertragung von Zellen vorgesehen sind,
**dadurch gekennzeichnet,**
**daß** die Netzwerkschnittstelle (9) ein Statusregister (25), das dazu vorgesehen ist, den Zustand der zugehörigen Station (10) und der Koppelvorrichtung (11) als Statusinformation zu speichern, und eine die Koppelvorrichtung (11) steuernde Steueranordnung (24) enthält,
**daß** die Koppelvorrichtung (11) mit dem Statusregister (25) und mit der Steueranordnung (24) gekoppelt ist,
und **daß** die Koppelvorrichtung (11) in Abhängigkeit der Statusinformation
zur Weiterleitung einer anwenderbezogene Informationen enthaltenden Anwenderzelle
- von der Empfangs-Ringverbindung (16) zur Sende-Ringverbindung (19) und/oder zur Station (10) oder
- von der Station (10) zur Sende-Ringverbindung (19),
zur Weiterleitung einer wenigstens zur Aufnahme von Vermittlungsfunktionen dienenden Kontrollzelle
- von der Empfangs-Ringverbindung (16) zur Sende-Ringverbindung (19) und/oder zur Steueranordnung (24) und/oder zur Station (10) oder
- von der Steueranordnung (24) zur Sende-Ringverbindung (19) und/oder zur Station (10) oder
- von der Station (10) zur Station (10) und/oder zur Sende-Ringverbindung (19) und/oder zur Steueranordnung (24)
vorgesehen ist.

2. Lokales Netzwerk nach Anspruch 1,
**dadurch gekennzeichnet,**
**daß** die Steueranordnung (24) zur Entnahme des Zustands der Station (10) und der Koppelvorrichtung (11) aus dem Statusregister (25) vorgesehen ist.

3. Lokales Netzwerk nach Anspruch 1 oder 2,
**dadurch gekennzeichnet,**
**daß** jede Netzwerkschnittstelle (9)
- zur Ableitung eines Empfangs-Taktsignals, das dem ankommenden Zellenstrom auf der Empfangs-Ringverbindung (16) zugeordnet ist, und
- zur Erzeugung eines vom Empfangs-Taktsignal entkoppelten Sende-Taktsignals vorgesehen ist, welches dem abgehenden Zellenstrom auf der Sende-Ringverbindung (19) zugeordnet ist.

4. Lokales Netzwerk nach Anspruch 3,
**dadurch gekennzeichnet,**
**daß** jede Netzwerkschnittstelle (9)
- einen Pufferspeicher (12) zwischen Empfangs-Ringverbindung (16) und Koppelvorrichtung (11) zur Anpassung des Zellenstromes an ein internes Taktsignal und
- einen Pufferspeicher (13) zwischen Sende-Ringverbindung (19) und Koppelvorrichtung (11) zur Anpassung des Zellenstromes an das Sende-Taktsignal enthält.

5. Lokales Netzwerk nach einem der Ansprüche 1 bis 4,
**dadurch gekennzeichnet,**
**daß** zwischen jeder Netzwerkschnittstelle (9) und der zugehörigen Station (10) Pufferspeicher (14, 15) zur Anpassung des von der Netzwerkschnittstelle (9) gelieferten oder zu empfangenden Zellenstromes wenigstens an ein Stations-Taktsignal vorgesehen sind.

6. Lokales Netzwerk nach einem der Ansprüche 1 bis 5,
**dadurch gekennzeichnet,**
**daß** jede Netzwerkschnittstelle (11) zur Sendung und zum Empfang von Zellen mit unterschiedlicher Priorität vorgesehen ist.

7. Lokales Netzwerk nach einem der Ansprüche 1 bis 6,
**dadurch gekennzeichnet,**
**daß** jede Netzwerkschnittstelle (9) oder jede Station (10) zur Einfügung einer Angabe über den Dienst, die Adresse und den Zelltyp in das Kopffeld einer zu sendenden Zelle vorgesehen ist.

8. Lokales Netzwerk nach Anspruch 7,
**dadurch gekennzeichnet,**
**daß** im Kopffeld der Zelle die für den VCI (virtual channel identifier) reservierten Bits die Information über den Dienst und die für den VPI (virtual path identifier) reservierten Bits die Information über die Adresse enthalten.

9. Lokales Netzwerk nach einem der Ansprüche 1 bis 8,
**dadurch gekennzeichnet,**
**daß** eine Sende-Station bei einem Verbindungswunsch mit mindestens einer Empfangs-Station zuerst zur Erzeugung von wenigstens einer Kontrollzelle mit einer Abfrage über den Zustand der Empfangs-Station vorgesehen ist,
**daß** mindestens eine Empfangs-Station nach Empfang der Abfrage zur Sendung wenigstens einer Kontrollzelle mit der Information über ihren Zustand vorgesehen ist und
**daß** die Sende-Station nach Empfang der Zustandsinformation zur Erzeugung wenigstens einer Kontrollzelle zum Verbindungsaufbau vorgesehen ist, wenn der Zustand mindestens einer Empfangs-Station eine Verbindung ermöglicht.

10. Lokales Netzwerk nach Anspruch 9,
**dadurch gekennzeichnet,**
**daß** die Sende- oder eine Empfangs-Station zur Erzeugung wenigstens einer Kontrollzelle mit einer Meldung über den Verbindungsabbau vorgesehen ist.

11. Lokales Netzwerk nach einem der Ansprüche 1 bis 10,
**dadurch gekennzeichnet,**
**daß** jeweils eine Station nur zur Überwachung des Verbindungsaufbaues in Sende- oder Empfangsrichtung vorgesehen ist.

12. Netzwerkschnittstelle (9) für ein lokales, ringförmiges, nach dem asynchronen Transfermodus (ATM) arbeitendes Netzwerk, mit der eine Station (10) und Sende- und Empfangs-Ringverbindungen (16, 19) gekoppelt sind und die wenigstens eine Koppelvorrichtung (11) zur Übertragung von Zellen enthält,
**dadurch gekennzeichnet,**
**daß** die Netzwerkschnittstelle (9) ein Statusregister (25), das dazu vorgesehen ist, den Zustand der zugehörigen Station (10) und der Koppelvorrichtung (11) als Statusinformation zu speichern, und eine die Koppelvorrichtung (11) steuernde Steueranordnung (24) enthält,
**daß** die Koppelvorrichtung (11) mit dem Statusregister (25) und mit der Steueranordnung (24) gekoppelt ist,
und **daß** die Koppelvorrichtung (11) in Abhängigkeit der Statusinformation
zur Weiterleitung einer anwenderbezogene Informationen enthaltenden Anwenderzelle
- von der Empfangs-Ringverbindung (16) zur Sende-Ringverbindung (19) und/oder zur Station (10) oder
- von der Station (10) zur Sende-Ringverbindung (19),
zur Weiterleitung einer wenigstens zur Aufnahme von Vermittlungsfunktionen dienenden Kontrollzelle
- von der Empfangs-Ringverbindung (16) zur Sende-Ringverbindung (19) und/oder zur Steueranordnung (24) und/oder zur Station (10) oder
- von der Steueranordnung (24) zur Sende-Ringverbindung (19) und/oder zur Station (10) oder
- von der Station (10) zur Station (10) und/oder zur Sende-Ringverbindung (19) und/oder zur Steueranordnung (24)
vorgesehen ist.

## Claims

1. A local-area, ring-formed network operating in the asynchronous transfer mode (ATM), comprising a plurality of stations (10) which are each coupled to transmitting and receiving ring lines (16, 19) *via* a network interface (9) which comprises at least one switch (11) and which stations are provided for transmitting cells, **characterized**
**in that** the network interface (9) comprises a status register (25) which is provided for storing the status of the associated station (10) and of the switch (11) as status information, and comprises a controller (24) controlling the switch (11),
**in that** the switch (11) is coupled to the status register (25) and to the controller (24),
and **in that** the switch (11) in response to status information is arranged for transferring a user cell containing user-related information
- from the receiving ring line (16) to the transmitting ring line (19) and/or to the station (10), or
- from the station (10) to the transmitting ring line (19),
for transferring a control cell used at least for storing switching functions
- from the receiving ring line (16) to the transmitting ring line (19) and/or to the controller (24) and/or to the station (10), or
- from the controller (24) to the transmitting ring line (19) and/or to the station (10), or
- from station (10) to station (10) and/or to the transmitting ring line (19) and/or to the controller (24).

2. A local area network as claimed in Claim 1, **characterized in that** the controller (24) is provided for extracting the status of the station (10) and of the switch (11) from the status register (25).

3. A local area network as claimed in Claim 1 or 2, **characterized in that** each network interface (9)
- is arranged for deriving a receiving clock signal which is assigned to the incoming cell stream over the receiving ring line (16), and
- is arranged for generating a transmitting clock signal decoupled from the received clock signal, which transmitting clock signal is assigned to the outgoing cell stream over the transmitting ring line (19).

4. A local area network as claimed in Claim 3, **characterized in that** each network interface (9) comprises
- a buffer memory (12) between receiving ring line (16) and switch (11) for matching the cell stream with an internal clock signal, and
- a buffer memory (13) between transmitting ring line (19) and switch (11) for matching the cell stream with the transmitting clock signal.

5. A local area network as claimed in Claims 1 to 4, **characterized in that** between each network interface (9) and the associated station (10) buffer memories (14, 15) are provided for matching the cell stream produced by the network interface (9) or to be received thereby at least with a station clock signal.

6. A local area network as claimed in one of the Claims 1 to 5, **characterized in that** each network interface (11) is provided for transmitting and receiving cells with different priorities.

7. A local area network as claimed in one of the Claims 1 to 6, **characterized in that** each network interface (9) or each station (10) is provided for inserting an entry about the service, the address and the type of cell into the header field of a cell to be transmitted.

8. A local area network as claimed in Claim 7, **characterized in that** the bits reserved for the VCI (Virtual Channel Identifier) in the header field of the cell contain information about the service and the bits reserved for the VPI (Virtual Path Identifier) contain the information about the address.

9. A local area network as claimed in one of the Claims 1 to 8, **characterized in that** a transmitter station, in the event of a request for a link to at least one receiver station, is first provided for generating at least one control cell containing an inquiry about the status of the receiver station, **in that** at least the receiver station, once it has received the inquiry, is arranged for sending out at least one control cell containing the information about its status, and **in that** the transmitter station, once it has received the status information, is provided for forming at least one control cell for a connection set-up if the status of at least one receiver station makes a link possible.

10. A local area network as claimed in Claim 9, **characterized in that** the transmitter or a receiver station is provided for generating at least one control cell which contains a message about the connection set-up.

11. A local area network as claimed in one of the Claims 1 to 10, **characterized in that** a respective station is arranged for only monitoring the connection set-up in the transmitting or in the receiving direction.

12. A network interface (9) for a local area, ring-formed network operating in the asynchronous transfer mode (ATM), to which are coupled a station (10) and transmitting and receiving ring lines (16, 19), and which comprises at least one switch (11) for transmitting cells, **characterized in that** the network interface (9) comprises a status register (25) which is provided for storing the status of the associated station (10) and of the switch (11) as status information, and comprises a controller controlling the switch (11),
**in that** the switch (11) is coupled to the status register (25) and to the controller (24),
**in that** the switch (11), in response to the status information, is arranged for relaying a user cell containing information relating to a user
- from the receiving ring line (16) to the transmitting ring line (19) and/or to the station (10), or
- from the station (10) to the transmitting ring line (19),
for relaying a control cell used at least for storing switching functions
- from the receiving ring line (16) to the transmitting ring line (19) and/or to the controller (24) and/or to the station (10), or
- from the controller (24) to the transmitting ring line (19) and/or to the station (10), or
- from station (10) to station (10) and/or to the transmitting ring line (19) and/or to the controller (24).

## Revendications

1. Réseau bouclé local fonctionnant selon le mode de transfert asynchrone (ATM) avec plusieurs stations (10) qui sont respectivement couplées par l'intermédiaire d'une interface de réseau (9) contenant au moins un dispositif de couplage (11) avec des liaisons bouclées de transmission et de réception (16, 19) et prévues pour la transmission de cellules,
**caractérisé en ce**
**que** l'interface de réseau (9) contient un registre d'état (25) qui est prévu pour enregistrer l'état de la station correspondante (10) et du dispositif de couplage (11) comme information d'état et un dispositif de commande (24) commandant le dispositif de couplage (11),
**que** le dispositif de couplage (11) est couplé au registre d'état (25) et au dispositif de commande (24),
et **qu'**en fonction de l'information d'état, le dispositif de couplage 11 est prévu pour la transmission d'une cellule d'opérateur contenant des informations relatives à l'opérateur
- de la liaison bouclée de réception (16) vers la liaison bouclée de transmission (19) et/ou vers la station (10) ou
- de la station (1) vers la liaison bouclée de transmission (19),
pour la transmission d'une cellule de contrôle servant au moins à exercer des fonctions de commutation
- de la liaison bouclée de réception (16) vers la liaison bouclée de transmission (19) et/ou vers le dispositif de commande (24) et/ou vers la station (10) ou
- du dispositif de commande (24) vers la liaison bouclée de transmission (19) et/ou vers la station (10) ou
- de la station (10) vers la station (10) et/ou vers la liaison bouclée de transmission (19) et/ou vers le dispositif de commande (24).

2. Réseau local selon la revendication 1,
**caractérisé en ce**
**que** le dispositif de commande (24) est prévu pour le prélèvement de l'état de la station (10) et du dispositif de couplage (11) du registre d'état (25).

3. Réseau local selon l'une des revendications 1 ou 2,
**caractérisé en ce**
**que** chaque interface de réseau (9)
- est prévue pour la dérivation d'un signal de rythme de réception qui est affecté au flux de cellules entrant sur la liaison bouclée de réception (16) et
- pour la production d'un signal de rythme de transmission découplé du signal de rythme de réception qui est affecté au flux de cellules sortant sur la liaison bouclée de transmission (19).

4. Réseau local selon la revendication 3,
**caractérisé en ce**
**que** chaque interface de réseau (9)
- contient une mémoire tampon (12) entre la liaison bouclée de réception (16) et le dispositif de couplage (11) pour l'adaptation du flux de cellules à un signal de rythme interne et
- une mémoire tampon (13) entre la liaison bouclée de transmission (19) et le dispositif de couplage (11) pour l'adaptation du flux de cellules au signal de rythme de transmission.

5. Réseau local selon l'une des revendications 1 à 4,
**caractérisé en ce**
**que** des mémoires tampons (14, 15) sont prévues entre chaque interface de réseau (9) et la station correspondante (10) pour l'adaptation du flux de cellules à recevoir ou délivré par l'interface de réseau (9) à au moins un signal de rythme de station.

6. Réseau local selon l'une des revendications 1 à 5,
**caractérisé en ce**
**que** chaque interface de réseau (11) est prévue pour la transmission et la réception de cellules de priorité différente.

7. Réseau local selon l'une des revendications 1 à 6,
**caractérisé en ce**
**que** chaque interface de réseau (9) ou chaque station (10) est prévue pour l'introduction d'une indication sur le service, l'adresse et le type de cellule dans la zone de tête d'une cellule à transmettre.

8. Réseau local selon la revendication 7,
**caractérisé en ce**
**que**, dans la zone de tête de la cellule, les bits réservés pour le VCI (virtual channel identifier) contiennent l'information sur le service et les bits réservés pour le VPI (virtual path identifier) l'information sur l'adresse.

9. Réseau local selon l'une des revendications 1 à 8,
**caractérisé en ce**
**qu'**en cas de souhait de liaison avec au moins une station de réception, une station de transmission est prévue d'abord pour la production d'au moins une cellule de contrôle avec une interrogation sur l'état de la station de réception,
**qu'**au moins une station de réception est prévue après réception de la demande de transmission d'au moins une cellule de contrôle avec l'information sur son état et
**que** la station de transmission est prévue après réception de l'information d'état pour la production d'au moins une cellule de contrôle pour l'établissement d'une liaison lorsque l'état d'au moins une station de réception permet une liaison.

10. Réseau local selon la revendication 9,
**caractérisé en ce**
**que** la station de transmission ou une station de réception est prévue pour la production d'au moins une cellule de contrôle avec un message sur la suppression de la liaison.

11. Réseau local selon l'une des revendications 1 à 10,
**caractérisé en ce**
**qu'**une station seulement est respectivement prévue pour la surveillance de l'établissement de la liaison dans la direction de transmission ou de réception.

12. Interface de réseau (9) pour un réseau bouclé local fonctionnant selon le mode de transfert asynchrone (ATM) avec laquelle une station (10) et des liaisons bouclées de transmission et de réception (16,19) sont couplées et qui contient au moins un dispositif de couplage (11) pour la transmission de cellules,
**caractérisée en ce**
**que** l'interface de réseau (9) contient un registre d'état (25) qui est prévu pour enregistrer l'état de la station correspondante (10) et du dispositif de couplage (11) comme information d'état et un dispositif de commande (24) commandant le dispositif de couplage (11),
**que** le dispositif de couplage (11) est couplé au registre d'état (25) et au dispositif de commande (24),
et **qu'**en fonction de l'information d'état, le dispositif de couplage 11 est prévu
pour la transmission d'une cellule d'opérateur contenant des informations relatives à l'opérateur
- de la liaison bouclée de réception (16) vers la liaison bouclée de transmission (19) et/ou vers la station (10) ou
- de la station (1) vers la liaison bouclée de transmission (19),
pour la transmission d'une cellule de contrôle servant au moins à exercer des fonctions de commutation
- de la liaison bouclée de réception (16) vers la liaison bouclée de transmission (19) et/ou vers le dispositif de commande (24) et/ou vers la station (10) ou
- du dispositif de commande (24) vers la liaison bouclée de transmission (19) et/ou vers la station (10) ou
- de la station (10) vers la station (10) et/ou vers la liaison bouclée de transmission (19) et/ou vers le dispositif de commande (24).
